Europäisches Patentamt

**European Patent Office**

**Office européen des brevets**

(11) Publication number: **0 139 361**
**A2**

(12) **EUROPEAN PATENT APPLICATION**

(21) Application number: **84305156.6**

(22) Date of filing: **30.07.84**

(51) Int. Cl.⁴: **G 01 K 17/06**

(30) Priority: **26.08.83 GB 8323097**

(43) Date of publication of application:
**02.05.85 Bulletin 85/18**

(84) Designated Contracting States:
**AT BE CH DE FR GB IT LI LU NL SE**

(71) Applicant: **SHIRLEY INSTITUTE**
**Wilmslow Road**
**Didsbury Manchester M20 8RX(GB)**

(72) Inventor: **Roberts, John Gabriel**
**87 Bridge Lane**
**Bramhall Cheshire(GB)**

(72) Inventor: **Reed, Colin Michael**
**61 Meltham Avenue**
**Withington Manchester(GB)**

(74) Representative: **Lawrence, John Gordon et al,**
**McNeight & Lawrence Regent House Heaton Lane**
**Stockport, Cheshire SK4 1BS(GB)**

(54) **Instrument for measuring temperature functions.**

(57) In order to assess a heating (or cooling) requirement over a period of time an instrument is provided which integrates temperature differentials below (or above) a reference temperature with respect to time and displays the result of the evaluation in degree days or other suitable units.

EP 0 139 361 A2

It is an object of the present invention to provide a portable instrument capable of installation at a given site and capable of giving a measurement of degree days for a given period and to a required degree of accuracy.

According to the present invention there is provided an instrument for measuring temperature functions comprising temperature sensing means and integrating means integrating temperature differential from a given reference temperature with respect to time when the sensed temperature lies to one side of the reference temperature.

Preferably the instrument gives results in degree days.

Generally, the reference temperature is a fixed value such as 15.5°C for example, but provision may be included for user adjustment to any desired value. Generally also the integration is carried out over a period of twentyfour hours from midnight to midnight, but provision may be included for the user to alter the time period over which the integration is to be performed.

Usually degree days essentially relate to heating requirement when the instrument integrates temperature differences below the reference temperature, but the instrument may measure the inverse property, integrating temperature differences only when the measured temperature is above the reference temperature, to provide a parameter relevant to the use of cooling systems.

The instrument may include memory means whereby a user can obtain a sequential display of evaluated degree days for a variety of different periods of his choice.

The invention will be further apparent from the following description, with reference to the several figures of the accompanying drawing, which show, by way of example only, one form of instrument embodying the invention.

Of the drawings:-

Figure 1 is a diagrammatic representation of the instrument and the different parts thereof;

and Figure 2 is a graph of temperature against time illustrating how the evaluation is made.

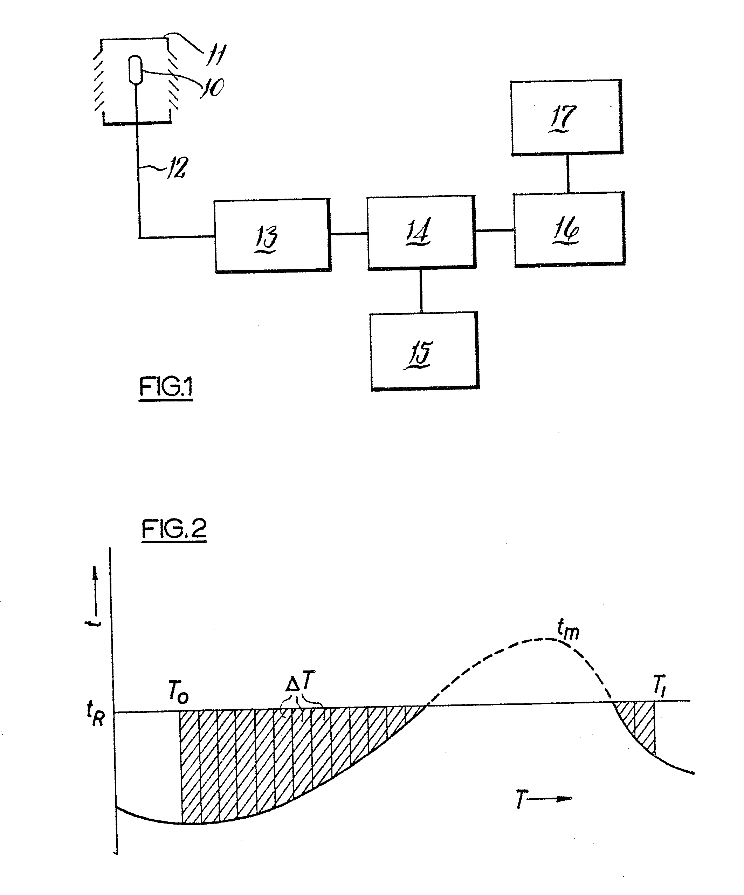

Referring firstly to Figure 1, it will be seen that the instrument includes a temperature sensing probe 10 housed in an enclosure 11, which whilst allowing free passage of air over the probe 10 shields it from direct sunlight. The sensing probe 10 supplies an electrical signal proportional to temperature sensed through line 12 to a microprocessor 14 by way of an analogue to digital converter 13. The data thus obtained is compared with data representing a reference temperature value such as $15.5^{\circ}C$ stored electronically within the microprocessor 14, with provision for the user to alter the value by means of the keyboard 15, to provide a measure of the difference between the sensed temperature and the reference temperature.

The microprocessor 14 is programmed to evaluate degree days over a period from time $T_o$ to time $T_1$ in accordance with the following equation:-

$$\frac{\sum\limits_{T_o}^{T_1} \S \, (t_R - t_m) \, . \, \Delta T}{\sum\limits_{T_o}^{T_1} \Delta T}$$

where the reference temperature is $t_R$ and the measured temperature is $t_m$ and where

$$\begin{aligned} S &= 1 \text{ for } t_R > t_m \\ &= 0 \text{ for } t_R < t_m \end{aligned}$$

whereby the summation is performed only when the difference $t_R - t_m$ is positive. This is necessary to assess a heating requirement.

The microprocessor 14 stores the evaluated degree-day data in data store 16 from which the information is transmitted to a display device 17 under control of the user via the keyboard 15.

The device 17 may be a liquid crystal display screen, a printer or other output facility.

The keyboard 15 may be employed to enable the user to set the time datum $T_o$ and later time $T_1$ so that the start and duration of the period over which the evaluation is made can be selected as desired.

In a more sophisticated arrangement the microprocessor may include memory enabling the user to interrogate the instrument to obtain the evaluation for a variety of different periods of his choice.

Where the instrument is to be used to assess a cooling requirement the programme is modified so that

$$\delta = 0 \text{ for } t_R > t_m$$
$$= 1 \text{ for } t_R < t_m$$

Although it would be normal to express the results of the evaulations in degree days as defined herein, other units may be used if desired.

## CLAIMS

1. An instrument for measuring temperature functions comprising temperature sensing means and integrating means integrating temperature differential from a given reference temperature with respect to time when the sensed temperature lies to one side of the reference temperature.

2. An instrument according to claim 1 wherein the integration is performed whenever the sensed temperature lies below the reference temperature in order to assess a heating requirement.

3. An instrument according to claim 1 wherein the integration is performed whenever the sensed temperature lies above the reference temperature in order to assess a heating requirement.

4. An instrument according to any one of claims 1 to 3 wherein means enabling a user to set said reference temperature is provided.

5. An instrument according to any one of claims 1 to 4 wherein means enabling a user to set the start and finish times for the integration is provided.

6.      An instrument according to any preceding claim including a microprocessor.

7.      An instrument according to claim 6 wherein the microprocessor is programmed to perform the integration in accordance with the equation:-

$$\frac{\sum\limits_{T_o}^{T_1} \delta \, (t_R - t_m) \cdot \triangle T}{\sum\limits_{T_o}^{T_1} \triangle T}$$

where $T_o$ is the start time

$T_1$ is the finish time

$T_R$ is the reference temperature

$T_m$ is the measured temperature

and $\delta = 1$ for $t_R > t_m$

$= 0$ for $t_R < t_m$

8.      An instrument according to claim 7 having a modified programme such that:-

$\delta = 0$ for $t_R > t_m$

$= 1$ for $t_R < t_m$

9.      An instrument according to any one of claims 6 to 8 including memory means for storing evaluated data and means for displaying such data as required by the user.

10.      An instrument according to any preceding claim wherein the results of the integration are expressed in degree days.

FIG.1

FIG.2